# EUROPEAN PATENT SPECIFICATION

(11) **EP 3 239 856 B1**
(45) Date of publication and mention of the grant of the patent: **26.02.2025**
(21) Application number: 16198472.9
(22) Date of filing: 11.11.2016
(51) Int. Cl.: G06F 16/50, G06F 16/22, G06F 16/9537

(54) **INFORMATION ACQUISITION METHOD, DEVICE AND SYSTEM**
VERFAHREN, VORRICHTUNG UND SYSTEM ZUR INFORMATIONSERFASSUNG
PROCÉDÉ, DISPOSITIF ET SYSTÈME D'ACQUISITION D'INFORMATIONS

(30) Priority: 27.04.2016 CN 201610270826
(43) Date of publication of application: 01.11.2017
(73) Proprietor: Beijing Xiaomi Mobile Software Co., Ltd., Beijing 100085 (CN)
(72) Inventor: LI, Xiaoyin, Haidian District, Beijing 100085 (CN); FAN, Dian, Haidian District, Beijing 100085 (CN); MA, Xuan, Haidian District, Beijing 100085 (CN)
(74) Representative: Dehns Germany Partnerschaft mbB

(56) References cited:
- US-A1- 2012 011 151
- VENKATAGIRI SESHADRI PADMANABHA ET AL: "On Demand Retrieval of Crowdsourced Mobile Video", IEEE SENSORS JOURNAL, vol. 15, no. 5, 8 July 2014 (2014-07-08), IEEE SERVICE CENTER, NEW YORK, NY, US, pages 2632 - 2642, XP011576758, ISSN: 1530-437X, [retrieved on 20150324], DOI: 10.1109/JSEN.2014.2336292

## Description

### TECHNICAL FIELD

The present disclosure generally relates to an information acquisition method, and system.

### BACKGROUND

At present, along with increasing popularization of smart terminals, users usually take photos with smart terminals in activities such as parties. After the activities, the users participating in the activities would like to share data such as the photos and videos in the activities.
VENKATAGIRI SESHADRI PADMANABHA ET AL: "On Demand Retrieval of Crowdsourced Mobile Video", IEEE SENSORS JOURNAL, vol.15, no.5. 8 July 2014 discloses an approach for mobile video sharing that uploads a small amount if metadata information generated on the smartphones to the server, instead of uploading the entire video by default.

US 2012/011151 A1 disclsoes an approach according to which terminals provide image metadata to a central search server that indexes the image metadata information. Once a terminal searches for an image, a request for a found image is relayed by the server to the terminal storing the image.

### SUMMARY

Accordingly, the present invention provides a solution in accordance with claims which follow.

In one preferred embodiment, the steps of the information acquisition method are determined by computer program instructions.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and detailed descriptions below are only exemplary and explanatory and not intended to limit the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the embodiments of the present disclosure.
Fig. 1 is a flow chart showing an information acquisition method according to an preferred embodiment;
Fig. 2 is a flow chart showing an information acquisition method according to another preferred embodiment;
Fig. 3 is a flow chart showing an information acquisition method according to another preferred embodiment;
Fig. 4 is a flow chart showing an information acquisition method according to another preferred embodiment;
Fig. 5 is a flow chart showing an information acquisition method according to another preferred embodiment;
Fig. 6 is a flow chart showing an information acquisition method according to another preferred embodiment;
Fig. 7 is a flow chart showing an information acquisition method according to another preferred embodiment;
Fig. 8 is a flow chart showing an information acquisition method according to another preferred embodiment;
Fig. 9 is a block diagram showing an information acquisition device according to an preferred embodiment;
Fig. 10 is a block diagram showing a determination module according to an preferred embodiment;
Fig. 11 is a block diagram showing a determination module according to another preferred embodiment;
Fig. 12 is a block diagram showing an information acquisition device according to another preferred embodiment;
Fig. 13 is a block diagram showing an information acquisition system according to an preferred embodiment;
Fig. 14 is a block diagram showing a device configured for acquiring information according to an preferred embodiment; and
Fig. 15 is a block diagram showing a device configured for acquiring information according to a preferred embodiment.

### DETAILED DESCRIPTION

Preferred embodiments, examples of which are illustrated in the accompanying drawings, will be described in detail herein. The following description refers to the accompanying drawings in which the same reference numbers in different drawings represent the same or similar elements unless otherwise indicated. The implementations set forth in the following description of preferred embodiments do not represent all implementations consistent with the embodiments of the present disclosure. Instead, they are merely examples of devices and methods consistent with some aspects related to the embodiments of the present disclosure as recited in detail in the appended claims.

According to the technical solutions provided by the embodiment of the present disclosure, event information, with the same event attribute, of multiple terminals is shared to improve information collection automation, increase an information collection speed and make users conveniently obtain wider information. The technical solutions of the embodiments of the present disclosure may be adopted for a first terminal initiating a request for acquiring event information, or a second terminal receiving the request, or a network-side server, or another terminal instead of the first terminal and the second terminal.

The first terminal may be any device with an information processing function, such as a mobile phone, a computer, a digital broadcast terminal, a messaging device, a gaming console, a tablet, a medical device, exercise equipment and a Personal Digital Assistant (PDA). The second terminal may be any device with the information processing function, such as a mobile phone, a computer, a digital broadcast terminal, a messaging device, a gaming console, a tablet, a medical device, exercise equipment and a PDA.

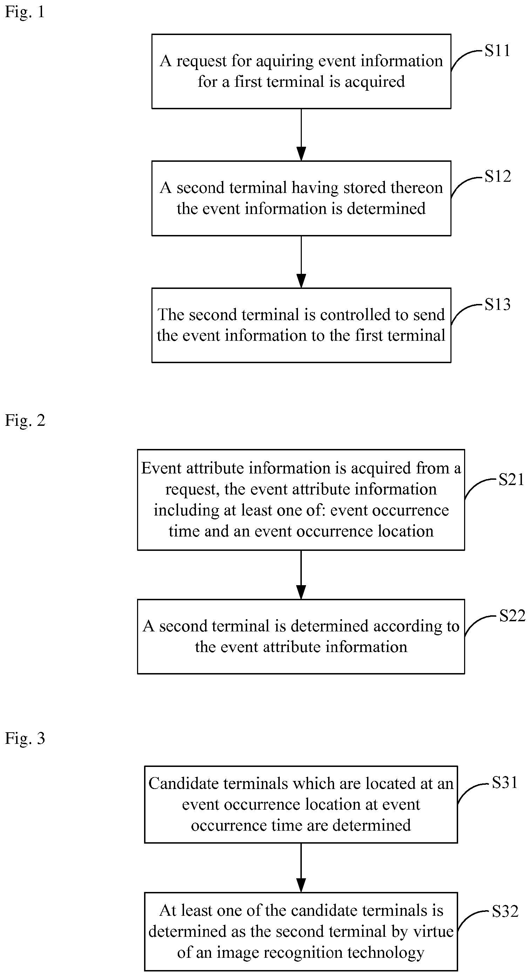

Fig. 1 is a flow chart showing an information acquisition method according to an preferred embodiment, and as shown in Fig. 1, the information acquisition method is adopted for a terminal or a server, and includes the following steps:
Step S11: a request for acquiring event information for a first terminal is acquired;
Step S12: a second terminal having stored thereon the event information is determined; and
Step S13: the second terminal is controlled to send the event information to the first terminal.

In the embodiment, the event information may include at least one of: event image information, event video information, event audio information and event text information, wherein the event text information includes at least one of: event website information and event webpage information.

In an example, an event is a dinner party, and after the dinner party, there may be stored information such as photos and videos of the dinner party in terminals of everyone participating in the dinner party. A second terminal participating in the dinner party may be determined according to a request initiated by a first terminal for acquiring the information of the dinner party, and the second terminal is controlled to automatically screen and send information such as images, videos, audios and texts of the dinner party to the first terminal.

In the embodiment, event information consistent with the request is collected automatically from each terminal according to the request, initiated by one terminal, for acquiring the event information, and the event information is shared, so that an information collection speed is increased, information collection efficiency is improved, user operation is reduced, information sharing among multiple users is facilitated, and good user experiences are achieved.

In another embodiment, the request includes event attribute information, and the event attribute information may include at least one of event occurrence time and an event occurrence location. In an example, the event is a dinner party, time for the dinner party is 18:00-21:00 on April 20, 2016, and a location for the dinner party is the A restaurant (the address is Number xx, XXX Road, Haidian District, Beijing).

Time when an event indicated by the event information occurs is the event occurrence time, and a location where the event indicated by the event information occurs is the event occurrence location.

In another embodiment, the second terminal having stored thereon the event information may be determined in the following two manners.

Manner 1: the second terminal is determined according to the event attribute information in the request.

Fig. 2 is a flow chart showing an information acquisition method according to another preferred embodiment, and as shown in Fig. 2, the step that the second terminal having stored thereon the event information is determined includes:
Step S21: event attribute information is acquired from the request, wherein the event attribute information includes at least one of: event occurrence time and an event occurrence location; and
Step S22: the second terminal is determined according to the event attribute information.

In an example, the event attribute information includes the event occurrence time such as 24:00 on December 31, 2015, and the second terminal having stored thereon the event information about the event occurring at the time may be determined according to the event occurrence time.

In another example, the event attribute information includes the event occurrence location such as the Tian'anmen, and the second terminal having stored thereon the event information about the event occurring at the location may be determined according to the event occurrence location.

In another example, the event attribute information includes the event occurrence time such as 24:00 on December 31, 2015 and the event occurrence location such as the Tian'anmen, the second terminal having stored thereon the event information about the event occurring at the location at the time may be determined.

Fig. 3 is a flow chart showing an information acquisition method according to the invention, and as shown in Fig. 3, the step that the second terminal is determined according to the event attribute information includes:
Step S31: candidate terminals which are located at the event occurrence location at the event occurrence time are determined; and
Step S32: at least one of the candidate terminals is determined as the second terminal by virtue of an image recognition technology.

In an example, the event attribute information includes the event occurrence time such as 24:00 on December 31, 2015 and the event occurrence location such as the Tian'anmen. In Step S31, terminals which are located at the Tian'anmen at 24:00 on December 31, 2015 are determined to obtain candidate terminals according to pre-acquired movement trajectory records of the respective terminals. In Step S32, an image or video stored on each candidate terminal is recognized to judge whether the stored image or video contains an image of the Tian'anmen or not by virtue of the image recognition technology, and if the stored image or video contains the image of the Tian'anmen, the terminal is determined as the second terminal.

In addition, generation time of the images or videos stored on the candidate terminals may also be recognized, and when a certain terminal includes an image or video generated at 24:00 on December 31, 2015 and the image or video contains an image of the Tian'anmen, the terminal may be determined as a candidate terminal.

In manner 1, the first terminal may automatically query the related second terminal according to the event attribute information and acquire the event information consistent with the event attribute information on the second terminal without specifying the second terminal with the event information to be acquired, so that a user may conveniently acquire related information without manual query, and information sharing among users within a larger range may be implemented.

Manner 2: the second terminal is determined according to a terminal identifier contained in the request.

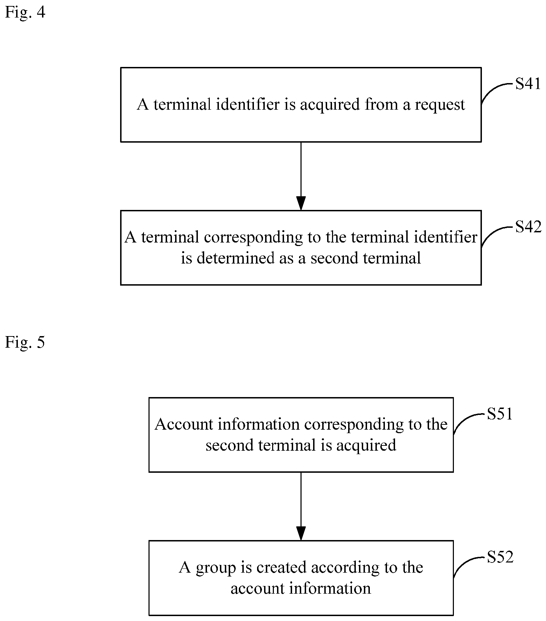

Fig. 4 is a flow chart showing an information acquisition method according to another preferred embodiment, and as shown in Fig. 4, the step that the second terminal having stored thereon the event information is determined includes:
Step S41: a terminal identifier is acquired from the request; and
Step S42: a terminal corresponding to the terminal identifier is determined as the second terminal.

In manner 2, the first terminal adds both the event attribute information and the terminal identifier of the second terminal into the request, so that the second terminal may be directly determined according to the request, the information may be rapidly collected and shared without manual user operation, convenience for use is ensured, and good user experiences are achieved.

In another embodiment, the step that the second terminal is controlled to send the event information to the first terminal includes that:
the event attribute information is sent to the second terminal to control the second terminal to send the event information to the first terminal.

In the embodiment, the event attribute information is sent to the second terminal, and the second terminal may screen a locally stored file according to the event attribute information to obtain the event information consistent with the event attribute information, and send the event information to the first terminal, so that a user of the second terminal may automatically implement information collection and sharing without manual file selection, convenience for use is ensured, and good user experiences are achieved.

Fig. 5 is a flow chart showing an information acquisition method according to another preferred embodiment, and as shown in Fig. 5, the method further includes:
Step S51: account information corresponding to the second terminal is acquired; and
Step S52: a group is created according to the account information.

In the present embodiment, the group may be created according to account information corresponding to the first terminal and the second terminal, the first terminal and the second terminal have event information with the same event attribute, that is, the first terminal and the second terminal are associated, and the first terminal and the second terminal automatically form a group, so that interaction among associated users is facilitated, the group may be created without manual user operation, convenience for use of the users is ensured, and good user experiences are achieved.

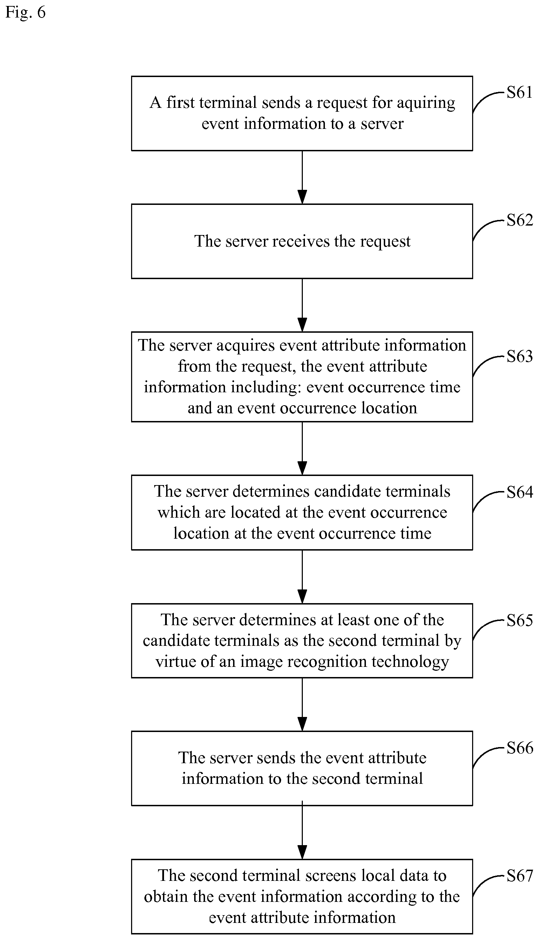

Fig. 6 is a flow chart showing an information acquisition method according to the invention, and as shown in Fig. 6, the information acquisition method includes the following steps.
Step S61: a first terminal sends a request for acquiring event information to a server;
Step S62: the server receives the request;
Step S63: the server acquires event attribute information from the request, wherein the event attribute information includes: event occurrence time and an event occurrence location;
Step S64: the server determines candidate terminals which are located at the event occurrence location at the event occurrence time;
Step S65: the server determines at least one of the candidate terminals as a second terminal by virtue of an image recognition technology;
Step S66: the server sends the event attribute information to the second terminal;
Step S67: the second terminal screens local data according to the event attribute information to obtain the event information; and
Further, in step S68 (not shown in Fig. 6) the second terminal sends the event information to the first terminal.

### On a first terminal side

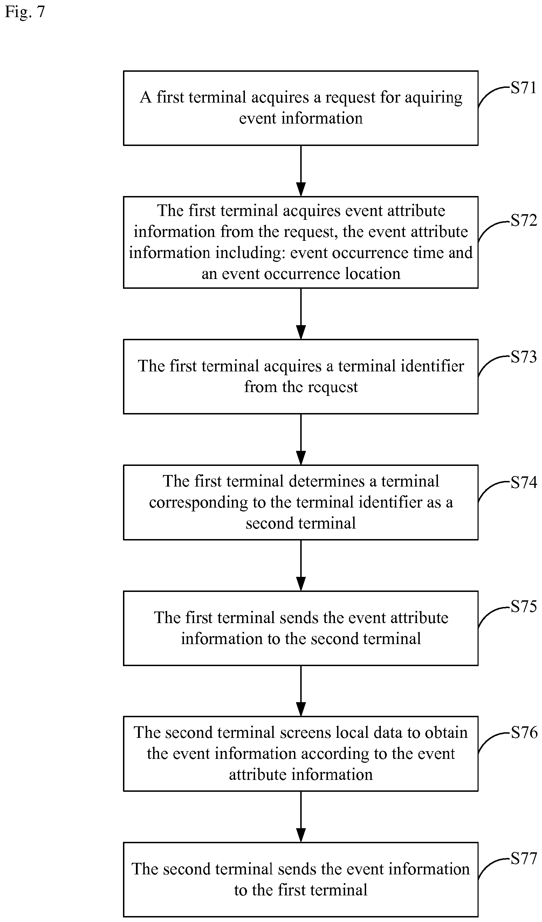

Fig. 7 is a flow chart showing an information acquisition method according to another preferred embodiment, and as shown in Fig. 7, the information acquisition method includes the following steps:
Step S71: a first terminal acquires a request for acquiring event information;
Step S72: the first terminal acquires event attribute information from the request, wherein the event attribute information includes: event occurrence time and an event occurrence location;
Step S73: the first terminal acquires a terminal identifier from the request;
Step S74: the first terminal determines a terminal corresponding to the terminal identifier as a second terminal;
Step S75: the first terminal sends the event attribute information to the second terminal;
Step S76: the second terminal screens local data according to the event attribute information to obtain the event information; and
Step S77: the second terminal sends the event information to the first terminal.

### On a second terminal side

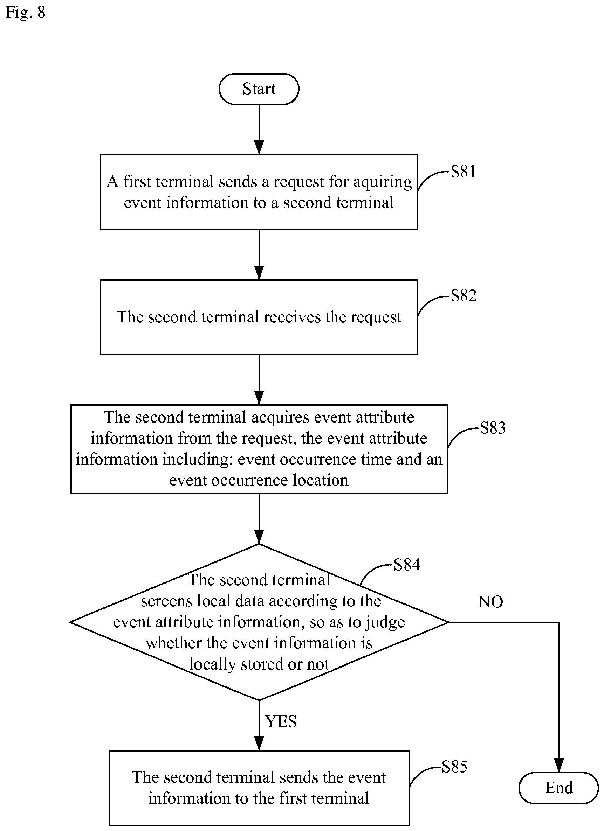

Fig. 8 is a flow chart showing an information acquisition method according to another preferred embodiment, and as shown in Fig. 8, the information acquisition method includes the following steps:
Step S81: a first terminal sends a request for acquiring event information to a second terminal;
Step S82: the second terminal receives the request;
Step S83: the second terminal acquires event attribute information from the request, wherein the event attribute information includes: event occurrence time and an event occurrence location;
Step S84: the second terminal screens local data according to the event attribute information to judge whether the event information is locally stored or not, and the flow proceeds to Step S85 if the event information is locally stored, and if the event information is not locally stored, the flow ends; and
Step S85: the second terminal sends the event information to the first terminal.

If the implementation subject for the method is another terminal instead of the first terminal and the second terminal, the method flow is the same as the method flow implemented by the server.

In the embodiment, the technical solutions of the embodiments of the present disclosure may be implemented by different equipment, so that an information collection speed is increased, information collection efficiency is improved, user operation is reduced, information sharing among multiple users is facilitated, and good user experiences are achieved.

An embodiment of a device of the present disclosure will be described below, and the device may be configured to execute the embodiment of the method of the present disclosure.

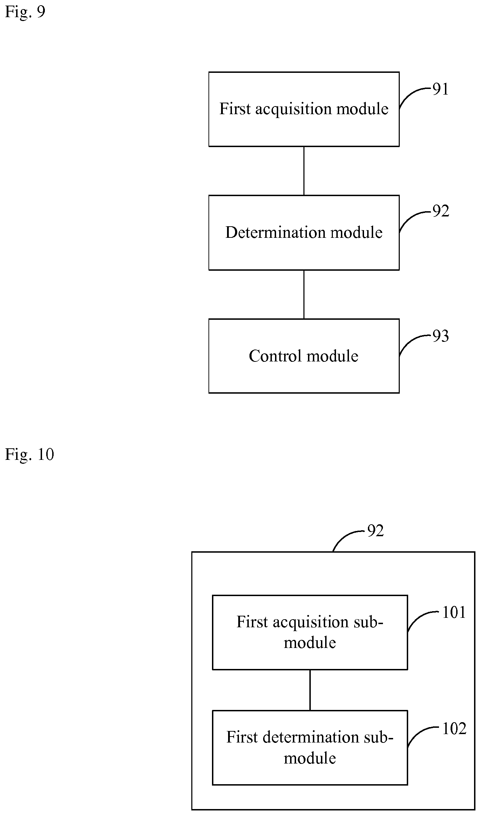

Fig. 9 is a block diagram showing an information acquisition device according to an preferred embodiment, and the device may be implemented into part or all of electronic equipment by virtue of software, hardware or a combination thereof. As shown in Fig. 9, the information acquisition device includes:
a first acquisition module 91 configured to acquire a request for acquiring event information for a first terminal;
a determination module 92 configured to determine a second terminal having stored thereon the event information to be acquired by the first acquisition module 91; and
a control module 93 configured to control the second terminal determined by the determination module 92 to send the event information to the first terminal.

In the present embodiment, the event information sent by the second terminal includes at least one of: event image information, event video information, event audio information and event text information, wherein the event text information includes at least one of: event website information and event webpage information.

In an example, an event is a dinner party, and after the dinner party, there may be stored information such as photos and videos of the dinner party in terminals of everyone participating in the dinner party. A second terminal participating in the dinner party may be determined according to a request, initiated by a first terminal, for acquiring the information of the dinner party, and the second terminal is controlled to automatically screen and send information such as images, videos, audios and texts of the dinner party to the first terminal.

In the present embodiment, event information consistent with the request in each terminal is collected automatically according to the request, initiated by one terminal, for acquiring the event information, and the event information is shared, so that an information collection speed is increased, information collection efficiency is improved, user operation is reduced, information sharing among multiple users is facilitated, and good user experiences are achieved.

In another embodiment, the request includes event attribute information which may include at least one of event occurrence time and an event occurrence location. In an example, the event is a dinner party, time for the dinner party is 18:00-21:00 on April 20, 2016, and a location for the dinner party is the A restaurant (the address is Number xx, XXX Road, Haidian District, Beijing).

Time when an event indicated by the event information occurs is the event occurrence time, and a location where the event indicated by the event information occurs is the event occurrence location.

In another embodiment, the determination module 92 may determine the second terminal having stored thereon the event information in the following two manners.

Manner 1: the determination module 92 determines the second terminal according to the event attribute information in the request.

Fig. 10 is a block diagram showing a determination module according to an preferred embodiment, and as shown in Fig. 10, the determination module 92 includes: a first acquisition sub-module 101 and a first determination sub-module 102.

The first acquisition sub-module 101 is configured to acquire event attribute information from the request acquired by the first acquisition module 91, the event attribute information including at least one of: event occurrence time and an event occurrence location.

The first determination sub-module 102 is configured to determine the second terminal according to the event attribute information acquired by the first acquisition sub-module 101.

In an example, the event attribute information includes the event occurrence time such as 24:00 on December 31, 2015, and the second terminal having stored thereon the event information about the event occurring at the time may be determined according to the event occurrence time.

In another example, the event attribute information includes the event occurrence location such as the Tian'anmen, and the second terminal having stored thereon the event information about the event occurring at the location may be determined according to the event occurrence location.

In another example, the event attribute information includes the event occurrence time such as 24:00 on December 31, 2015 and the event occurrence location such as the Tian'anmen, and the second terminal having stored thereon the event information about the event occurring at the location at the time may be determined.

Optionally, the first determination sub-module 102 is configured to determine candidate terminals which are located at the event occurrence location at the event occurrence time are determined, and determine at least one of the candidate terminals as the second terminal by virtue of an image recognition technology.

In an example, the event attribute information includes the event occurrence time such as 24:00 on December 31, 2015 and the event occurrence location such as the Tian'anmen. The first acquisition sub-module 101 may determine terminals which are located at the Tian'anmen at 24:00 on December 31, 2015 to obtain candidate terminals according to pre-acquired movement trajectory records of the respective terminals. The first determination sub-module 102 recognizes an image or video stored on each candidate terminal to judge whether the stored image or video contains an image of the Tian'anmen or not by virtue of the image recognition technology, and if the stored image or video contains the image of the Tian'anmen, may determine the terminal as the second terminal.

In addition, generation time of the images or videos stored on the candidate terminals may also be recognized, and when a certain terminal includes an image or video generated at 24:00 on December 31, 2015 and the image or video contains an image of the Tian'anmen, the terminal may be determined as a candidate terminal.

In manner 1, the first terminal may automatically query the related second terminal according to the event attribute information and acquire the event information consistent with the event attribute information on the second terminal without specifying the second terminal with the event information to be acquired, so that a user may conveniently acquire related information without manual query, and information sharing among users within a larger range may be implemented.

Manner 2: the determination module 92 determines the second terminal according to a terminal identifier contained in the request.

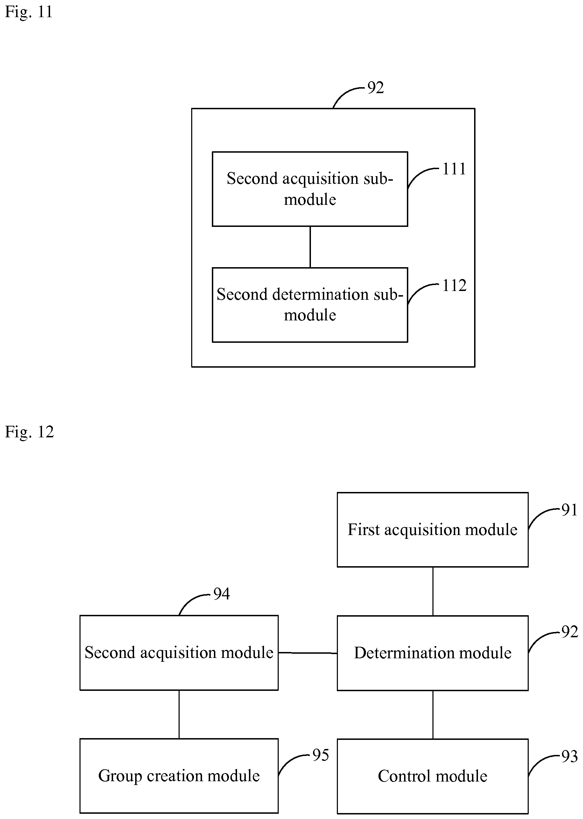

Fig. 11 is a block diagram showing a determination module according to another preferred embodiment, and as shown in Fig. 11, the determination module 92 includes: a second acquisition sub-module 111 and a second determination sub-module 112.

The second acquisition sub-module 111 is configured to acquire a terminal identifier from the request acquired by the first acquisition module 91.

The second determination sub-module 112 is configured to determine a terminal corresponding to the terminal identifier acquired by the second acquisition sub-module 111 as the second terminal.

In manner 2, the first terminal adds both the event attribute information and the terminal identifier of the second terminal into the request, so that the second terminal may be directly determined according to the request, the information may be rapidly collected and shared without manual user operation, convenience for use is ensured, and good user experiences are achieved.

Optionally, the control module 93 is configured to control the second terminal to send the event information to the first terminal by sending the event attribute information to the second terminal.

In the embodiment, the event attribute information is sent to the second terminal, and the second terminal may screen a locally stored file according to the event attribute information to obtain the event information consistent with the event attribute information, and send the event information to the first terminal, so that a user of the second terminal may automatically implement information collection and sharing without manual file selection, convenience for use is ensured, and good user experiences are achieved.

Fig. 12 is a block diagram showing an information acquisition device according to another preferred embodiment, and as shown in Fig. 12, the device further includes: a second acquisition module 94 and a group creation module 95.

The second acquisition module 94 is configured to acquire account information corresponding to the second terminal determined by the determination module 93.

The group creation module 95 is configured to create a group according to the account information acquired by the second acquisition module 94.

In the present embodiment, the group may be created according to account information corresponding to the first terminal and the second terminal, the first terminal and the second terminal have event information with the same event attribute, that is, the first terminal and the second terminal are associated, and the first terminal and the second terminal automatically form a group, so that interaction among associated users is facilitated, the group may be created without manual user operation, convenience for use of the users is ensured, and good user experiences are achieved.

The embodiment of present disclosure further provides an information acquisition device, which includes:
a processor; and
a memory configured to store processor-executable instructions,
wherein the processor is configured to:
acquire a request for acquiring event information for a first terminal;
determine a second terminal having stored thereon the event information; and
control the second terminal to send the event information to the first terminal.

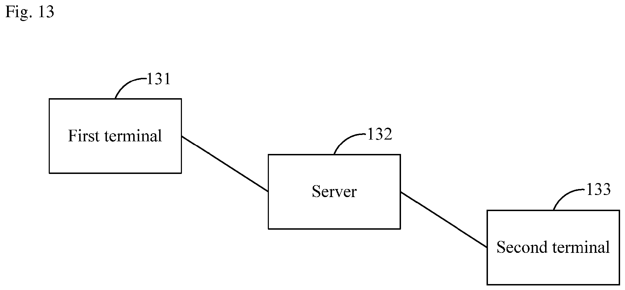

Fig. 13 is a block diagram showing an information acquisition system according to an preferred embodiment, and as shown in Fig. 13, the system includes: a first terminal 131, a server 132 and a second terminal 133.

The first terminal 131 is configured to send a request for acquiring event information to the server 132.

The server 132 is configured to acquire the request sent by the first terminal 131, determine the second terminal 133 having stored thereon the event information and control the second terminal 133 to send the event information to the first terminal 131.

The second terminal 133 is configured to send the event information to the first terminal 131.

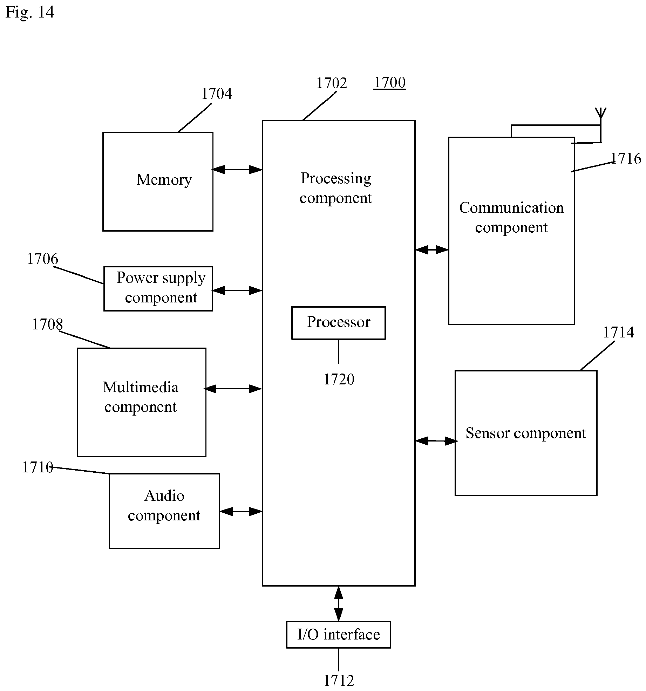

Fig. 14 is a block diagram showing a device configured for acquiring information according to an preferred embodiment, and the device is applicable to terminal device. In an example, the device 1700 may be a video camera, voice recording equipment, a mobile phone, a computer, a digital broadcast terminal, a messaging device, a gaming console, a tablet, a medical device, exercise equipment, a PDA and the like.

The device 1700 may include one or more of the following components: a processing component 1702, a memory 1704, a power supply component 1706, a multimedia component 1708, an audio component 1710, an Input/Output (I/O) interface 1712, a sensor component 1714, and a communication component 1716.

The processing component 1702 typically controls overall operations of the device 1700, such as the operations associated with display, telephone calls, data communications, camera operations, and recording operations. The processing component 1702 may include one or more processors 1720 to execute instructions to perform all or part of the steps in the abovementioned method. Moreover, the processing component 1702 may include one or more modules which facilitate interaction between the processing component 1702 and the other components. For instance, the processing component 1702 may include a multimedia module to facilitate interaction between the multimedia component 1708 and the processing component 1702.

The memory 1704 is configured to store various types of data to support the operation of the device 1700. Examples of such data include instructions for any application programs or methods operated on the device 1700, contact data, phonebook data, messages, pictures, video, etc. The memory 1704 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power supply component 1706 provides power for various components of the device 1700. The power supply component 1706 may include a power management system, one or more power supplies, and other components associated with the generation, management and distribution of power for the device 1700.

The multimedia component 1708 includes a screen providing an output interface between the device 1700 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 1708 includes a front camera and/or a rear camera. The front camera and/or the rear camera may receive external multimedia data when the device 1700 is in an operation mode, such as a photographing mode or a video mode. Each of the front camera and the rear camera may be a fixed optical lens system or have capabilities of focusing and optical zooming.

The audio component 1710 is configured to output and/or input an audio signal. In an example, the audio component 1710 includes a Microphone (MIC) which is configured to receive an external audio signal when the device 1700 is in the operation mode, such as a call mode, a recording mode and a voice recognition mode. The received audio signal may be further stored in the memory 1704 or sent through the communication component 1716. In some embodiments, the audio component 1710 further includes a speaker configured to output the audio signal.

The I/O interface 1712 provides an interface between the processing component 1702 and a peripheral interface module, and the peripheral interface module may be a keyboard, a click wheel, a button and the like. The button may include, but not limited to: a home button, a volume button, a starting button and a locking button.

The sensor component 1714 includes one or more sensors configured to provide status assessment in various aspects for the device 1700. For instance, the sensor component 1714 may detect an on/off status of the device 1700 and relative positioning of components, such as a display and keypad of the device 1700, and the sensor component 1714 may further detect a change in a position of the device 1700 or a component of the device 1700, presence or absence of contact between the user and the device 1700, orientation or acceleration/deceleration of the device 1700 and a change in temperature of the device 1700. The sensor component 1714 may include a proximity sensor configured to detect presence of an object nearby without any physical contact. The sensor component 1714 may also include a light sensor, such as a Complementary Metal Oxide Semiconductor (CMOS) or Charge Coupled Device (CCD) image sensor, configured for use in an imaging application. In some embodiments, the sensor component 1714 may also include an acceleration sensor, a gyroscope sensor, a magnetic sensor, a pressure sensor or a temperature sensor.

The communication component 1716 is configured to facilitate wired or wireless communication between the device 1700 and another device. The device 1700 may access a communication-standard-based wireless network, such as a Wireless Fidelity (WiFi) network, a 2nd-Generation (2G) or 3rd-Generation (3G) network or a combination thereof. In an preferred embodiment, the communication component 1716 receives a broadcast signal or broadcast associated information from an external broadcast management system through a broadcast channel. In an preferred embodiment, the communication component 1716 further includes a Near Field Communication (NFC) module to facilitate short-range communication. In an example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an preferred embodiment, the device 1700 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an preferred embodiment, there is also provided a non-transitory computer-readable storage medium containing instructions, such as the memory 1704 containing instructions, and the instruction may be executed by the processor 1720 of the device 1700 to implement the abovementioned method. In an example, the non-transitory computer-readable storage medium may be a ROM, a Compact Disc Read-Only Memory (CD-ROM), a magnetic tape, a floppy disc, an optical data storage device and the like.

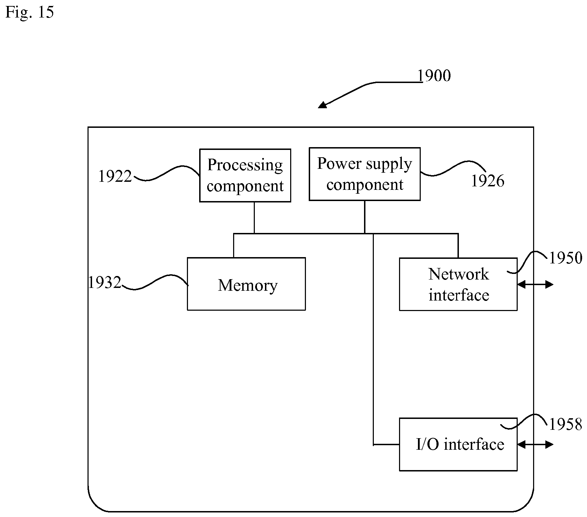

Fig. 15 is a block diagram showing a device configured for acquiring information according to an preferred embodiment. In an example, the device 1900 may be provided as a server. The device 1900 includes a processing component 1922, which further includes one or more processors, and a memory resource represented by a memory 1932 configured to store instructions such as application programs which may be executable by the processing component 1922. The application programs stored in the memory 1932 may include one or more modules of which each corresponds to a set of instructions. In addition, the processing component 1922 is configured to execute the instructions to execute the abovementioned method.

The device 1900 may further include a power supply component 1926 configured to execute power mangement of the device 1900, a wired or wireless network interface 1950 configured to connect the device 1900 to a network, and an I/O interface 1958. The device 1900 may be operated on the basis of an operating system stored in the memory 1932, such as Windows ServerTM, Mac OS XTM, UnixTM, LinuxTM, FreeBSDTM or the like.

A non-transitory computer-readable storage medium is provided, in which instructions are executed by the processor of the device 1700 or the device 1900 to enable the device 1700 or the device 1900 to execute the abovementioned information acquisition method, the method including that:
a request for acquiring event information for a first terminal is acquired;
a second terminal having stored thereon the event information is determined; and
the second terminal is controlled to send the event information to the first terminal.

Optionally, the step that the second terminal having stored thereon the event information is determined includes that:
event attribute information is acquired from the request, the event attribute information including at least one of: event occurrence time and an event occurrence location; and
the second terminal is determined according to the event attribute information.

Optionally, time when an event indicated by the event information occurs is the event occurrence time, and a location where the event indicated by the event information occurs is the event occurrence location.

Optionally, the step that the second terminal is determined according to the event attribute information includes that:
candidate terminals which are located at the event occurrence location at the event occurrence time are determined; and
at least one of the candidate terminals is determined as the second terminal by virtue of an image recognition technology.

Optionally, the step that the second terminal having stored thereon the event information is determined includes that:
a terminal identifier is acquired from the request; and
a terminal corresponding to the terminal identifier is determined as the second terminal.

Optionally, the step that the second terminal is controlled to send the event information to the first terminal includes that:
the event attribute information is sent to the second terminal to control the second terminal to send the event information to the first terminal.

Optionally, the method further includes that:
account information corresponding to the second terminal is acquired; and
a group is created according to the account information.

Optionally, the event information includes at least one of: event image information, event video information, event audio information and event text information, wherein the event text information includes at least one of: event website information and event webpage information.

Other implementations of the embodiments of the present disclosure will be easily conceived by those skilled in the art from consideration of the specification and practice of the present disclosure. The invention is defined by the attached claims.

## Claims

1. An information acquisition method, comprising:
acquiring, by a server, a request for acquiring event information for a first terminal (S11);
acquiring, by the server, event attribute information from the request (S21), wherein the event attribute information comprises event occurrence time and an event occurrence location, **characterized by** further comprising:
determining, by the server, candidate terminals which are located at the event occurrence location at the event occurrence time according to pre-acquired movement trajectory records of the respective terminals (S31);
determining, by the server, one of the candidate terminals as a second terminal by virtue of an image recognition technology, wherein an image or video stored on each candidate terminal is recognized to judge whether the stored image or video contains an image of the event location (S32); and
controlling, by the server, the second terminal to send the event information consistent with the event attribute information to the first terminal by sending the event attribute information acquired from the request to the second terminal (S13).

2. The method according to claim 1, wherein time when an event indicated by the event information occurs is the event occurrence time, and a location where the event indicated by the event information occurs is the event occurrence location.

3. The method according to claim 1, wherein the method further comprising:
acquiring, by the server, account information corresponding to the second terminal (S51); and
creating, by the server, a group according to the account information (S52).

4. An information acquisition system, wherein the system is configured to perform the method of any of claims 1-3. 2

5. A computer program including instructions for executing the steps of an information acquisition method according to any one of claims 1 to 3.

6. A recording medium readable by a computer and having recorded thereon a computer program according claim 5.

## Patentansprüche

1. Verfahren zur Informationsbeschaffung, umfassend:
Beschaffen, durch einen Server, einer Anforderung zur Beschaffung von Ereignisinformationen für ein erstes Endgerät (S11);
Beschaffen, durch den Server, von Ereignisattributinformationen aus der Anforderung (S21), wobei die Ereignisattributinformationen eine Ereigniseintrittszeit und einen Ereigniseintrittsort umfassen, **dadurch gekennzeichnet, dass** es ferner umfasst:
Ermitteln, durch den Server, von Kandidaten-Endgeräten, die sich zur Ereigniseintrittszeit am Ereigniseintrittsort befinden, gemäß vorab erfasster Bewegungstrajektorienaufzeichnungen der jeweiligen Endgeräte (S31);
Ermitteln, durch den Server, eines der Kandidaten-Endgeräte als ein zweites Endgerät mittels einer Bilderkennungstechnologie, wobei in einem Bild oder Video, das in jedem Kandidaten-Endgerät gespeichert ist, erkannt wird, um zu beurteilen, ob das gespeicherte Bild oder Video ein Bild des Ereignisorts enthält (S32); und
Steuern, durch den Server, des zweiten Endgeräts zum Senden der Ereignisinformationen, die mit den Ereignisattributinformationen übereinstimmen, an das erste Endgerät durch Senden der Ereignisattributinformationen, die von der Anforderung an das zweite Endgerät beschafft wurden (S13).

2. Verfahren nach Anspruch 1, wobei der Zeitpunkt, zu dem ein durch die Ereignisinformationen angegebenes Ereignis eintritt, die Ereigniseintrittszeit ist, und ein Ort, an dem das durch die Ereignisinformationen angegebene Ereignis eintritt, der Ereigniseintrittsort ist.

3. Verfahren nach Anspruch 1, wobei das Verfahren ferner umfasst:
Beschaffen, durch den Server, von Kontoinformationen, die dem zweiten Endgerät entsprechen (S51); und
Erzeugen, durch den Server, einer Gruppe gemäß den Kontoinformationen (S52).

4. Informationsbeschaffungssystem, wobei das System dazu konfiguriert ist, das Verfahren nach einem der Ansprüche 1 bis 3 auszuführen.

5. Ein Computerprogramm mit Anweisungen zur Ausführung der Schritte eines Verfahrens zur Informationsbeschaffung nach einem der Ansprüche 1 bis 3.

6. Ein durch einen Computer lesbares Aufzeichnungsmedium, auf dem ein Computerprogramm nach Anspruch 5 aufgezeichnet ist.

## Revendications

1. Procédé d'acquisition d'informations, comprenant :
acquérir, par un serveur, une requête d'acquisition d'informations d'événement pour un premier terminal (S11) ;
acquérir, par le serveur, une information d'attribut d'événement à partir de la requête (S21), dans laquelle l'information d'attribut d'événement comprend une heure d'occurrence d'événement et un emplacement d'occurrence d'événement, **caractérisé en ce qu'**il comprend en outre :
déterminer, par le serveur, des terminaux candidats qui sont situés à l'emplacement d'occurrence d'événement à l'heure d'occurrence d'événement en fonction des enregistrements de trajectoire de déplacement pré-acquis des terminaux respectifs (S31) ;
déterminer, par le serveur, l'un des terminaux candidats en tant que deuxième terminal en vertu d'une technologie de reconnaissance d'image, dans laquelle dans une image ou une vidéo stockée sur chaque terminal candidat est reconnue pour juger si l'image ou la vidéo stockée contient une image de l'emplacement d'événement (S32) ; et
commander, par le serveur, le deuxième terminal pour envoyer l'information d'événement cohérente avec l'information d'attribut d'événement au premier terminal en envoyant l'information d'attribut d'événement acquise à partir de la requête au deuxième terminal (S13).

2. Le procédé selon la revendication 1, dans lequel une heure à laquelle un événement indiqué par l'information d'événement se produit est l'heure d'occurrence d'événement, et un emplacement où l'événement indiqué par l'information d'événement se produit est l'emplacement d'occurrence d'événement.

3. Le procédé selon la revendication 1, dans lequel le procédé comprend en outre :
acquérir, par le serveur, des informations de compte correspondant au deuxième terminal (S51) ; et
créer, par le serveur, un groupe en fonction des informations de compte (S52).

4. Système d'acquisition d'informations, dans lequel le système est configuré pour effectuer le procédé selon l'une quelconque des revendications 1 à 3.

5. Programme d'ordinateur comprenant des instructions pour l'exécution des étapes d'un procédé d'acquisition d'informations selon quelconque des revendications 1 à 3.

6. Médium d'enregistrement lisible par un ordinateur et sur lequel est enregistré un programme d'ordinateur selon la revendication 5.
